# FASCICULE DE BREVET EUROPEEN

(11) **EP 2 807 115 B1**
(45) Date de publication et mention de la délivrance du brevet: **08.04.2020**
(21) Numéro de dépôt: 13700923.9
(22) Date de dépôt: 23.01.2013
(51) Int. Cl.: C01B 33/193

(54) **PROCÉDÉ DE PRÉPARATION DE SILICES PRÉCIPITÉES À MORPHOLOGIE, GRANULOMÉTRIE ET POROSITÉ PARTICULIÈRES**
VERFAHREN ZUR HERSTELLUNG VON FÄLLUNGSKIESELSÄURE MIT SPEZIFISCHER MORPHOLOGIE, TEILCHENGRÖSSE UND POROSITÄT
METHOD FOR PREPARING PRECIPITATED SILICA HAVING A SPECIFIC MORPHOLOGY, PARTICLE SIZE, AND POROSITY

(30) Priorité: 25.01.2012 FR 1200211
(43) Date de publication de la demande: 03.12.2014
(73) Titulaire: Rhodia Opérations, 75009 Paris (FR)
(72) Inventeur: ALLAIN, Emmanuelle, F-94240 L'Hay les Roses (FR); NEVEU, Sylvaine, F-75005 Paris (FR)
(74) Mandataire: Delenne, Marc
(86) Numéro de dépôt international: PCT/EP2013/051233
(87) Numéro de publication internationale: WO 2013/110654

(56) Documents cités:
- EP-A1- 0 520 862
- EP-A1- 0 754 650
- WO-A1-95/09127
- WO-A1-2009/112458
- WO-A1-2010/022544
- WO-A1-2011/026893

## Description

La présente invention concerne un nouveau procédé de préparation de silice précipitée à morphologie, granulométrie et porosité particulières, se présentant notamment sous forme de poudre, de billes sensiblement sphériques ou de granulés.

Il est connu d'employer des silices précipitées comme support de catalyseur, comme absorbant de matières actives (en particulier supports de liquides, par exemple utilisés dans l'alimentation, tels que les vitamines (vitamine E notamment), le chlorure de choline), comme agent viscosant, texturant ou anti-mottant, comme élément pour séparateurs de batteries, comme additif pour dentifrice, pour papier.

On peut également employer des silices précipitées comme charge renforçante dans des matrices silicones (par exemple pour l'enrobage des câbles électriques) ou dans des compositions à base de polymère(s), naturels(s) ou synthétique(s), en particulier d'élastomère(s), notamment diéniques, par exemple pour les semelles de chaussures, les revêtements de sols, les barrières aux gaz, les matériaux ignifugeants et également les pièces techniques telles que les galets de téléphériques, les joints d'appareils électroménagers, les joints de conduite de liquides ou de gaz, les joints de système de freinage, les gaines, les câbles et les courroies de transmissions.

Il est ainsi connu de préparer, en mettant en œuvre une réaction de précipitation entre un silicate et un acide dilué, des silices précipitées, utilisables comme charge renforçante pour les compositions de polymères, aux caractéristiques atypiques, leur procurant de plus un compromis de propriétés très satisfaisant, en particulier au niveau de leurs propriétés rhéologiques, mécaniques et dynamiques, notamment hystérétiques.

WO2010/022544A1 décrit un procédé de préparation de silices précipitées dans lequel l'acide utilisé dans la réaction de précipitation est choisi dans le groupe constitué de l'acide sulfurique à hauteur de 90 à 98,5 % en poids, de l'acide chlorhydrique à hauteur de 34 à 42,7 % en poids, de l'acide nitrique à hauteur de 60 à 68 % en poids, de l'acide phosphorique à hauteur de 80 à 100 % en poids, de l'acide carbonique ou du CO₂ et du bisulfite de sodium ou du SO₂.

Le but de la présente invention est de proposer une alternative aux procédés connus de préparation de silice précipitée.

Plus préférentiellement, l'un des buts de la présente invention consiste à fournir un procédé, qui tout en ayant une productivité améliorée en particulier au niveau de la réaction de précipitation, notamment par rapport aux procédés de préparation de l'état de la technique mettant en œuvre à titre d'acide un acide dilué, permet d'obtenir des silices précipitées ayant des caractéristiques physicochimiques et des propriétés similaires, notamment au niveau de leur morphologie, leur granulométrie et leur porosité et/ou de leurs propriétés renforçantes, à celles des silices précipitées obtenues par ces procédés de préparation de l'état de la technique.

Un autre but de l'invention consiste préférentiellement, dans le même temps, à fournir un procédé permettant de réduire la quantité d'énergie consommée et/ou la quantité d'eau employée lors de la préparation de silice précipitée, notamment par rapport aux procédés de préparation de l'état de la technique mettant en œuvre, à titre d'acide, un acide dilué.

Notamment dans ces buts, l'objet de l'invention est un nouveau procédé de préparation de silice précipitée selon la revendication 1, ledit procédé comprenant la réaction d'un silicate avec au moins un acide ce par quoi l'on obtient une suspension de silice, puis la séparation et le séchage de cette suspension, dans lequel la réaction du silicate avec l'acide est réalisée selon les étapes successives suivantes :
(i) on prépare une suspension aqueuse de silice précipitée, présentant un pH compris entre 2,5 et 5,3,
(ii) on met en contact (mélange) ladite suspension aqueuse de silice précipitée avec de l'acide et du silicate, de telle manière que le pH du milieu réactionnel soit maintenu entre 2,5 et 5,3,
procédé dans lequel :
- de l'acide concentré est utilisé dans l'étape (i),
ledit acide concentré étant choisi dans le groupe formé par l'acide sulfurique présentant une concentration d'au moins 80 % en masse, en particulier d'au moins 90 % en masse, l'acide acétique ou l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse.

De manière avantageuse, l'acide concentré est de l'acide sulfurique concentré, c'est-à-dire de l'acide sulfurique présentant une concentration d'au moins 80 % en masse, de préférence d'au moins 90 % en masse.

On peut ainsi utiliser, comme acide concentré, de l'acide sulfurique ayant une concentration d'au moins 1400 g/L, en particulier d'au moins 1650 g/L.

La suspension aqueuse de silice précipitée, utilisée dans l'étape (ii), est préparée, dans l'étape (i), de la manière suivante :
(1) on forme un pied de cuve initial comportant du silicate et un électrolyte, la concentration en silicate (exprimée en SiO₂) dans ledit pied de cuve initial étant inférieure à 100 g/L, en particulier inférieure à 80 g/L, et, de manière préférée, la concentration en électrolyte dans ledit pied de cuve initial étant inférieure à 19 g/L, en particulier inférieure à 18 g/L, notamment inférieure à 17 g/L, par exemple inférieure à 15 g/L (tout en étant le plus souvent supérieure à 6 g/L),
(2) on ajoute de l'acide audit pied de cuve jusqu'à l'obtention d'une valeur du pH du milieu réactionnel d'au moins environ 7, de préférence comprise entre 7,5 et 8,5,
(3) on ajoute au milieu réactionnel, simultanément, de l'acide et du silicate,
(4) on arrête l'addition du silicate tout en continuant l'addition de l'acide dans le milieu réactionnel, jusqu'à l'obtention d'une valeur du pH du milieu réactionnel comprise entre 2,5 et 5,3, de préférence entre 2,8 et 5,2,
dans laquelle de l'acide concentré est utilisé dans l'étape (3) et dans l'étape (2) après l'atteinte du point de gel.

Dans cette méthode préférée de préparation de la suspension aqueuse de silice précipitée, le pied de cuve initial comprend un électrolyte. Le terme d'électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'acide, par exemple le chlorure de sodium dans le cas de la réaction d'un silicate de sodium avec l'acide chlorhydrique ou, de préférence, le sulfate de sodium dans le cas de la réaction d'un silicate de sodium avec l'acide sulfurique.

Dans l'étape (1), la concentration en électrolyte du pied de cuve initial est supérieure à 0 g/L, par exemple supérieure à 8 g/L.

L'addition simultanée de l'étape (3) est généralement réalisée de manière telle que la valeur du pH du milieu réactionnel soit constamment égale (à ± 0,2 près) à celle atteinte à l'issue de l'étape (2).

Il peut être procédé à l'issue de l'étape (4) à un mûrissement du milieu réactionnel (suspension aqueuse) obtenu, au pH obtenu à l'issue de cette étape (4), et en général sous agitation, par exemple pendant 2 à 45 minutes, en particulier pendant 3 à 30 minutes.

Les étapes (1) à (4), comme en général l'ensemble de la réaction, sont le plus souvent effectuées sous agitation.

Toutes les étapes (1), (2), (3) et (4) (et, de préférence, l'étape (ii) et l'éventuelle étape (iii) décrite ci-dessous) sont habituellement réalisées entre 75 et 97 °C, de préférence entre 80 et 96 °C.

Selon une mise en œuvre du procédé de l'invention, l'ensemble des étapes est effectué à une température constante. Selon une autre mise en œuvre du procédé de l'invention, la température de fin de réaction est plus élevée que la température de début de réaction : ainsi, on maintient la température au début de la réaction (par exemple au cours des étapes (1) et (2)) de préférence entre 75 et 90 °C, puis on augmente la température, de préférence jusqu'à une valeur comprise entre 90 et 97 °C, valeur à laquelle elle est maintenue (par exemple au cours des étapes (3), (4), voire (ii) et éventuellement (iii)) jusqu'à la fin de la réaction.

Dans le procédé de préparation de l'invention,
on met en contact (étape (ii)) :
- une suspension aqueuse de silice précipitée (qui peut être une bouillie réactionnelle de silice précipitée), ladite suspension présentant un pH compris entre 2,5 et 5,3, de préférence entre 2,8 et 5,2, par exemple entre 3,5 et 5,1 (voire entre 3,5 et 5,0),
- avec de l'acide et du silicate,
de telle manière (en particulier à des débits tels) que le pH du milieu réactionnel soit maintenu entre 2,5 et 5,3, de préférence entre 2,8 et 5,2, par exemple entre 3,5 et 5,1 (voire entre 3,5 et 5,0).

Ledit pH du milieu réactionnel peut varier à l'intérieur de la plage 2,5-5,3, de préférence de la plage 2,8-5,2, par exemple 3,5-5,1 (voire 3,5-5,0), ou de manière préférée rester (sensiblement) constant à l'intérieur de ces plages.

En général, dans cette étape (ii), la mise en contact de la suspension aqueuse avec l'acide et le silicate est effectuée en ajoutant de l'acide et du silicate à la suspension aqueuse de silice précipitée.

Selon une mise en œuvre du procédé de l'invention, dans l'étape (ii), on ajoute à la suspension aqueuse de silice précipitée d'abord l'acide, puis le silicate.

Cependant, selon une mise en œuvre préférée du procédé de l'invention, dans l'étape (ii), on ajoute plutôt simultanément l'acide et le silicate à la suspension aqueuse de silice précipité ; de préférence, cette addition simultanée est effectuée avec régulation du pH du milieu réactionnel à une valeur (sensiblement) constante à l'intérieur des plages précitées.

L'étape (ii) est habituellement effectuée sous agitation.

Il est possible dans une éventuelle étape (iii) ultérieure, d'ajouter, dans le milieu réactionnel obtenu à l'issue de l'étape (ii), un agent alcalin, de préférence un silicate, et ce jusqu'à atteindre une valeur du pH du milieu réactionnel comprise entre 4,7 et 6,3, de préférence entre 5,0 et 5,8, par exemple entre 5,0 et 5,4.

Cette étape (iii) est habituellement effectuée sous agitation.

L'étape (ii) et l'éventuelle étape (iii)) sont généralement réalisées entre 75 et 97 °C, de préférence entre 80 et 96 °C.

Il peut être avantageux de procéder à l'issue de l'étape (ii), ou de l'éventuelle étape (iii), à un mûrissement du milieu réactionnel obtenu, notamment au pH obtenu à l'issue de cette étape (ii) (ou de l'étape (iii)), et en général sous agitation. Ce mûrissement peut par exemple durer de 2 à 30 minutes, en particulier de 3 à 20 minutes et peut être réalisé entre 75 et 97 °C, de préférence entre 80 et 96 °C, en particulier à la température à laquelle a été effectuée l'étape (ii) (ou l'étape (iii)). Il ne comporte préférentiellement ni addition d'acide, ni addition de silicate.

Selon une variante du procédé de l'invention, de l'acide concentré tel que défini ci-dessus est utilisé que dans l'étape (i).

Cependant, selon un mode de réalisation préféré du procédé de l'invention, de l'acide concentré tel que défini ci-dessus est utilisé à la fois dans les étapes (i) et (ii).

Selon le procédé de l'invention, de l'acide concentré est utilisé dans l'étape (i).

De manière avantageuse, ledit acide concentré est de l'acide sulfurique concentré, c'est-à-dire de l'acide sulfurique présentant une concentration d'au moins 80 % en masse, de préférence d'au moins 90 % en masse.

On peut ainsi utiliser, comme acide concentré, de l'acide sulfurique ayant une concentration d'au moins 1400 g/L, en particulier d'au moins 1650 g/L.

L'acide utilisé dans les étapes (2), (4) et (ii) peut être alors par exemple un acide dilué, de manière avantageuse de l'acide sulfurique dilué, c'est-à-dire présentant une concentration très inférieure à 80 % en masse, en l'occurrence une concentration inférieure à 20 % en masse (et en général d'au moins 4 % en masse), en particulier inférieure à 14 % en masse, notamment d'au plus 10 % en masse, par exemple comprise entre 5 et 10 % en masse.

Cependant, de préférence, l'acide utilisé dans l'étape (4) est également, comme dans l'étape (3), un acide concentré tel que mentionné ci-dessus.

Dans une deuxième et dernière partie de l'étape (2), l'acide utilisé est également un acide concentré tel que mentionné ci-dessus (l'acide utilisé dans l'autre partie de l'étape (2) étant par exemple un acide dilué comme décrit ci-dessus).

Ainsi, dans cette étape (2), l'acide employé jusqu'à ce qu'on atteigne le point de gel dans le milieu réactionnel (correspondant à une brusque augmentation de la turbidité du milieu réactionnel caractéristique d'une augmentation de taille des objets) peut alors être un acide dilué tel que mentionné ci-dessus, de manière avantageuse de l'acide sulfurique dilué (c'est-à-dire présentant une concentration très inférieure à 80 % en masse, en l'occurrence une concentration inférieure à 20 % en masse, en général inférieure à 14 % en masse, en particulier d'au plus 10 % en masse, par exemple compris entre 5 et 10 % en masse). L'acide employé après atteinte du point de gel dans le milieu réactionnel peut quant à lui être un acide concentré tel que mentionné ci-dessus, de manière avantageuse de l'acide sulfurique concentré, c'est-à-dire de l'acide sulfurique présentant une concentration d'au moins 80 % en masse, de préférence d'au moins 90 % en masse, en particulier comprise entre 90 et 98 % en masse.

De même, dans cette étape (2), l'acide employé dans les x premières minutes de l'étape (2), avec x compris entre 10 et 25, de préférence entre 12 et 22, peut alors être un acide dilué tel que mentionné ci-dessus et l'acide employé après les x premières minutes de l'étape (2), avec x compris entre 10 et 25, de préférence entre 12 et 22, peut être un acide concentré tel que mentionné ci-dessus.

Dans le cadre de ce mode de réalisation, l'acide utilisé dans la totalité de l'étape (2) peut également être un acide concentré tel que mentionné ci-dessus, de manière avantageuse de l'acide sulfurique concentré, c'est-à-dire présentant une concentration d'au moins 80 % en masse, de préférence d'au moins 90 % en masse, en particulier comprise entre 90 et 98 % en masse. Dans le cas de cette utilisation, on peut éventuellement ajouter de l'eau dans le pied de cuve initial, en particulier soit avant l'étape (2) soit au cours de l'étape (2).

Dans ce mode de réalisation, de l'acide concentré tel que défini ci-dessus est utilisé uniquement dans l'étape (i). On utilise alors dans l'étape (ii) de l'acide dilué, de manière avantageuse de l'acide sulfurique dilué, c'est-à-dire présentant une concentration très inférieure à 80 % en masse, en l'occurrence une concentration inférieure à 20 % en masse (et en général d'au moins 4 % en masse), en particulier inférieure à 14 % en masse, notamment d'au plus 10 % en masse, par exemple comprise entre 5 et 10 % en masse

Cependant, de manière préférée, de l'acide concentré tel que défini ci-dessus est utilisé à la fois dans les étapes (i) et (ii).

Dans le procédé selon l'invention, on utilise généralement comme acide(s) (acide concentré ou acide dilué) un acide organique tel que l'acide acétique, l'acide formique ou l'acide carbonique ou de préférence un acide minéral tel que l'acide sulfurique, l'acide nitrique, l'acide phosphorique ou l'acide chlorhydrique.

Si on utilise comme acide concentré de l'acide acétique concentré ou de l'acide formique concentré, alors leur concentration est d'au moins 90 % en masse.

Si on utilise comme acide concentré de l'acide nitrique concentré, alors sa concentration est d'au moins 60 % en masse.

Si on utilise comme acide concentré de l'acide phosphorique concentré, alors sa concentration est d'au moins 75 % en masse.

Si on utilise comme acide concentré de l'acide chlorhydrique concentré, alors sa concentration est d'au moins 30 % en masse.

Cependant, de manière très avantageuse, on emploie comme acide(s) un (des) acide(s) sulfurique(s), l'acide sulfurique concentré alors utilisé présentant une concentration telle que déjà mentionnée dans l'exposé ci-dessus.

En général, lorsque de l'acide concentré est utilisé dans plusieurs étapes, on emploie alors le même acide concentré.

On peut par ailleurs utiliser en tant que silicate toute forme courante de silicates tels que métasilicates, disilicates et avantageusement un silicate de métal alcalin, notamment le silicate de sodium ou de potassium.

Le silicate peut présenter une concentration (exprimée en SiO₂) comprise entre 40 et 330 g/L, par exemple entre 60 et 300 g/L, en particulier entre 60 et 260 g/L.

De manière générale, on emploie, comme silicate, le silicate de sodium.

Dans le cas où l'on utilise le silicate de sodium, celui-ci présente, en général, un rapport pondéral SiO₂/Na₂O compris entre 2,5 et 4, par exemple entre 3,2 et 3,8.

L'agent alcalin employé lors de l'éventuelle étape (iii) peut être par exemple une solution de soude, de potasse ou d'ammoniac. De préférence, cet agent alcalin est du silicate, en particulier du silicate tel qu'utilisé lors de l'étape (ii).

Dans le procédé selon l'invention, l'étape (ii) peut être effectuée dans un mélangeur rapide ou dans une zone d'écoulement turbulent, ce qui peut permettre un meilleur contrôle des caractéristiques des silices précipitées obtenues.

Par exemple, dans le cas où, dans l'étape (ii), on ajoute à la suspension aqueuse de silice précipitée d'abord l'acide, puis le silicate, alors la mise en contact dudit silicate avec le milieu résultant de l'ajout de l'acide à la suspension aqueuse de silice précipitée peut être effectuée dans un mélangeur rapide ou dans une zone d'écoulement turbulent.

De même, dans le cas où, dans l'étape (ii), on ajoute simultanément l'acide et le silicate à la suspension aqueuse de silice précipitée, alors la mise en contact dudit acide et dudit silicate avec la suspension aqueuse de silice précipitée peut être effectuée dans un mélangeur rapide ou dans une zone d'écoulement turbulent.

De préférence, le milieu réactionnel obtenu dans le mélangeur rapide ou dans une zone d'écoulement turbulent alimente un réacteur, de préférence soumis à une agitation, réacteur dans lequel l'étape (iii) est ensuite mise en œuvre.

Dans l'étape (ii), on peut utiliser un mélangeur rapide choisi parmi les mélangeurs (ou tubes) en T ou en Y symétriques, les mélangeurs (ou tubes) en T ou en Y asymétriques, les mélangeurs à jets tangentiels, les mélangeurs Hartridge-Roughton, les mélangeurs vortex, les mélangeurs rotor-stators.

Les mélangeurs (ou tubes) en T ou en Y symétriques sont généralement constitués de deux tubes opposés (tubes en T) ou formant un angle inférieur à 180° (tubes en Y), de même diamètre, déchargeant dans un tube central dont le diamètre est identique ou supérieur à celui des deux tubes précédents. Ils sont dits « symétriques » car les deux tubes d'injection des réactifs présentent le même diamètre et le même angle par rapport au tube central, le dispositif étant caractérisé par un axe de symétrie. De préférence, le tube central présente un diamètre deux fois plus élevé environ que le diamètre des tubes opposés ; de même la vitesse de fluide dans le tube central est de préférence égale à la moitié de celle dans les tubes opposés.

On préfère cependant employer, en particulier lorsque les deux fluides à introduire ne présentent pas le même débit, un mélangeur (ou tube) en T ou en Y asymétriques plutôt qu'un mélangeur (ou tube) en T ou en Y symétrique. Dans les dispositifs asymétriques, un des fluides (le fluide de plus faible débit en général) est injecté dans le tube central au moyen d'un tube latéral de diamètre plus faible. Ce dernier forme avec le tube central un angle de 90° en général (tube en T) ; cet angle peut être différent de 90° (tube en Y), donnant des systèmes à co-courant (par exemple angle de 45°) ou à contre-courant (par exemple angle de 135°) par rapport à l'autre courant.

A titre de mélangeur rapide, on utilise de préférence un mélangeur à jets tangentiels, un mélangeur Hartridge-Roughton ou un mélangeur (ou précipiteur) vortex, qui dérivent des dispositifs en T symétriques.

Plus particulièrement, dans l'étape (ii), on peut mettre en œuvre un mélangeur rapide à jets tangentiels, Hartridge-Roughton ou vortex, comprenant une chambre ayant (a) au moins deux admissions tangentielles par lesquelles entrent séparément (mais en même temps) soit, d'une part, le silicate, et, d'autre part, le milieu résultant de l'ajout d'acide à la suspension aqueuse de silice précipitée, soit, d'une part, le silicate et l'acide, et, d'autre part, la suspension aqueuse de silice précipitée, et (b) une sortie axiale par laquelle sort le milieu réactionnel et ce, de préférence, vers un(e) réacteur (cuve) disposé(e) en série après ledit mélangeur. Les deux admissions tangentielles sont de préférence situées symétriquement, et de manière opposée, par rapport à l'axe central de ladite chambre.

La chambre du mélangeur à jets tangentiels, Hartridge-Roughton ou vortex éventuellement utilisé présente généralement une section circulaire et est de préférence de forme cylindrique.

Chaque tube d'admission tangentielle peut présenter un diamètre interne d de 0,5 à 80 mm.

Ce diamètre interne d peut être compris entre 0,5 et 10 mm, en particulier entre 1 et 9 mm, par exemple entre 2 et 7 mm. Cependant, notamment à l'échelle industrielle, il est de préférence compris entre 10 et 80 mm, en particulier entre 20 et 60 mm, par exemple entre 30 et 50 mm.

Le diamètre interne de la chambre du mélangeur à jets tangentiels, Hartridge-Roughton ou vortex éventuellement employé peut être compris entre 3d et 6d, en particulier entre 3d et 5d, par exemple égal à 4d ; le diamètre interne du tube de sortie axiale peut être compris entre 1d et 3d, en particulier entre 1,5d et 2,5d, par exemple égal à 2d.

Les débits du silicate et de l'acide sont par exemple déterminés de façon à ce qu'au point de confluence les deux courants de réactifs entrent en contact l'un avec l'autre dans une zone d'écoulement suffisamment turbulent.

Dans le procédé selon l'invention, on obtient, à l'issue de l'étape (ii), ou éventuellement de l'étape (iii), le cas échéant suivie d'un mûrissement, une bouillie de silice qui est ensuite séparée (séparation liquide-solide).

La séparation mise en œuvre dans le procédé de préparation selon l'invention comprend habituellement une filtration, suivie d'un lavage si nécessaire. La filtration s'effectue selon toute méthode convenable, par exemple au moyen d'un filtre presse, d'un filtre à bande, d'un filtre sous vide.

La suspension de silice ainsi récupérée (gâteau de filtration) est ensuite séchée.

Ce séchage peut se faire selon tout moyen connu en soi.

De préférence, le séchage se fait par atomisation. A cet effet, on peut utiliser tout type d'atomiseur convenable, notamment un atomiseur à turbines, à buses, à pression liquide ou à deux fluides. En général, lorsque la filtration est effectuée à l'aide d'un filtre presse, on utilise un atomiseur à buses, et, lorsque la filtration est effectuée à l'aide d'un filtre sous-vide, on utilise un atomiseur à turbines.

Il y a lieu de noter que le gâteau de filtration n'est pas toujours dans des conditions permettant une atomisation notamment à cause de sa viscosité élevée. D'une manière connue en soi, on soumet alors le gâteau à une opération de délitage. Cette opération peut être réalisée mécaniquement, par passage du gâteau dans un broyeur de type colloïdal ou à billes. Le délitage est généralement effectué en présence d'un composé de l'aluminium, en particulier d'aluminate de sodium et, éventuellement, en présence d'un acide tel que décrit précédemment (dans ce dernier cas, le composé de l'aluminium et l'acide sont généralement ajoutés de manière simultanée). L'opération de délitage permet notamment d'abaisser la viscosité de la suspension à sécher ultérieurement.

Lorsque le séchage est effectué à l'aide d'un atomiseur à buses, la silice susceptible d'être alors obtenue se présente habituellement sous forme de billes sensiblement sphériques.

A l'issue du séchage, on peut alors procéder à une étape de broyage sur le produit récupéré. La silice qui est alors susceptible d'être obtenue se présente généralement sous forme d'une poudre.

Lorsque le séchage est effectué à l'aide d'un atomiseur à turbines, la silice susceptible d'être alors obtenue peut se présenter sous la forme d'une poudre.

Enfin, le produit séché (notamment par un atomiseur à turbines) ou broyé tel qu'indiqué précédemment peut éventuellement être soumis à une étape d'agglomération, qui consiste par exemple en une compression directe, une granulation voie humide (c'est-à-dire avec utilisation d'un liant tel que eau, suspension de silice ...), une extrusion ou, de préférence, un compactage à sec. Lorsque l'on met en œuvre cette dernière technique, il peut s'avérer opportun, avant de procéder au compactage, de désaérer (opération appelée également pré-densification ou dégazage) les produits pulvérulents de manière à éliminer l'air inclus dans ceux-ci et assurer un compactage plus régulier.

La silice susceptible d'être alors obtenue par cette étape d'agglomération se présente généralement sous la forme de granulés.

Les poudres, de même que les billes, de silice obtenues par le procédé selon l'invention offrent ainsi l'avantage, entre autre, d'accéder de manière simple, efficace et économique, à des granulés, notamment par des opérations classiques de mise en forme, telles que par exemple une granulation ou un compactage, sans que ces dernières n'entraînent de dégradations susceptibles de masquer, voire annihiler, les bonnes propriétés intrinsèques attachées à ces poudres ou ces billes.

De manière générale, le procédé selon l'invention permet d'obtenir des silices formées d'agrégats de grosses particules primaires de silice à la surface desquels se trouvent des petites particules primaires de silice présentant avantageusement les caractéristiques des silices décrites dans la demande internationale WO 2009/112458.

La mise en œuvre du procédé de préparation selon l'invention, particulièrement lorsque l'acide concentré utilisé est de l'acide sulfurique concentré, permet notamment d'obtenir au cours dudit procédé (à l'issue de l'étape (ii) ou de l'éventuelle étape (iii)) une suspension plus concentrée en silice précipitée que celle obtenue par un procédé identique utilisant uniquement de l'acide dilué, et donc un gain en productivité en silice précipitée (pouvant atteindre par exemple au moins 10 à 40 %) en particulier à la réaction de précipitation (c'est-à-dire à l'issue de l'étape (ii)), tout en s'accompagnant de manière surprenante de l'obtention de silice précipitée ayant une bonne aptitude à la dispersion (dispersibilité) dans les compositions de polymère(s) (élastomère(s)) ; de manière plus générale, les silices précipitées obtenues par le procédé selon l'invention présentent une morphologie, une granulométrie et une porosité spécifiques ; en outre, elles présentent généralement une bonne aptitude à la dispersion (dispersibilité) dans les polymères. Elles confèrent à ceux-ci un compromis de propriétés très satisfaisant, en particulier au niveau de leurs propriétés mécaniques, dynamiques et rhéologiques, comparables à celles des silices précipitées obtenues par un procédé identique utilisant uniquement de l'acide dilué. Elles permettent également de manière avantageuse l'obtention d'un bon compromis renforcement / propriétés hystérétiques.

De manière avantageuse, dans le même temps, notamment lorsque l'acide concentré utilisé est de l'acide sulfurique concentré, le procédé selon l'invention permet, par rapport à un procédé identique employant uniquement de l'acide dilué, un gain (pouvant atteindre par exemple au moins 20 à 60 %) sur la consommation d'énergie (sous forme de vapeur vive par exemple), en particulier à la réaction de précipitation (c'est-à-dire à l'issue de l'étape (ii)), du fait d'une diminution des quantités d'eau engagées et de l'exo-thermicité liée à l'utilisation d'acide concentré. En outre, l'utilisation d'acide concentré permet de restreindre (par exemple d'au moins 20 %) la quantité d'eau nécessaire à la réaction, notamment du fait de la diminution de la quantité d'eau utilisée pour la préparation de l'acide.

Les silices précipitées préparées par le procédé selon l'invention peuvent être utilisées dans de nombreuses applications.

Elles peuvent être employées par exemple comme support de catalyseur, comme absorbant de matières actives (en particulier support de liquides, notamment utilisés dans l'alimentation, tels que les vitamines (vitamine E), le chlorure de choline), dans des compositions de polymère(s), notamment d'élastomère(s), de silicone(s), comme agent viscosant, texturant ou anti-mottant, comme élément pour séparateurs de batteries, comme additif pour dentifrice, pour béton, pour papier.

Cependant, elles trouvent une application particulièrement intéressante dans le renforcement des polymères, naturels ou synthétiques.

Les compositions de polymère(s) dans lesquelles elles peuvent être utilisées, notamment à titre de charge renforçante, sont en général à base d'un ou plusieurs polymères ou copolymères, en particulier d'un ou plusieurs élastomères, notamment les élastomères thermoplastiques, présentant, de préférence, au moins une température de transition vitreuse comprise entre -150 et +300 °C, par exemple entre -150 et +20 °C.

A titre de polymères possibles, on peut citer les polymères diéniques, en particulier les élastomères diéniques.

On peut citer, à titre d'exemples, non limitatifs, d'articles finis à base des compositions de polymère(s) décrites précédemment les semelles de chaussures, les pneumatiques, les revêtements de sols, les barrières aux gaz, les matériaux ignifugeants et également les pièces techniques telles que les galets de téléphériques, les joints d'appareils électroménagers, les joints de conduites de liquides ou de gaz, les joints de système de freinage, les gaines (notamment les gaines de câbles), les câbles, les supports de moteur, les bandes de convoyeur et les courroies de transmissions.

Les exemples suivants illustrent l'invention sans toutefois en limiter la portée.

### EXEMPLE 1 (comparatif)

Dans un réacteur en acier inoxydable de 25 litres, muni d'un système d'agitation par hélices et d'un chauffage par double enveloppe, on introduit :
- 7,91 litres d'eau de ville
- 4285 grammes de silicate de sodium aqueux présentant un rapport pondéral SiO₂/Na₂O égal à 3,55 +/- 0,12 et ayant une concentration égale à 235 g/L
- 134 grammes de sulfate de sodium Na₂SO₄ (électrolyte)

La concentration en silicate (exprimée en SiO₂) dans le pied de cuve est alors de 72 g/L.

Le mélange est homogénéisé par agitation et porté à 95 °C. L'ensemble de la réaction est réalisé sous agitation (300 tr/min, agitation hélice).

On introduit dans le mélange de l'acide sulfurique de concentration égale à 80 g/L pendant 15 minutes à un débit de 146 g/min (soit 2192 grammes d'acide sulfurique). On introduit ensuite dans le mélange de l'acide sulfurique de concentration égale à 80 g/L pendant environ 5 minutes à un débit de 438 g/min (soit 2153 grammes d'acide sulfurique).

Une fois l'acidification achevée, on introduit simultanément dans le milieu réactionnel, et ce pendant 10 minutes, une solution de silicate de sodium (de rapport pondéral SiO₂/Na₂O égal à 3,55 +/- 0,12 et de densité d20 égale à 1,230 +/- 0,006) ayant une concentration de 235 g/L à un débit de 80 g/min, et de l'acide sulfurique de concentration égale à 80 g/L, à un débit régulé de manière à maintenir le pH du milieu réactionnel à une valeur de 8.

Au terme des 10 minutes d'addition simultanée, on introduit de l'acide sulfurique de concentration égale à 80 g/L à un débit de 80 g/min, jusqu'à ce que le pH du milieu réactionnel atteigne une valeur de 4,7 (soit 414 grammes d'acide sulfurique en 5 minutes).

On introduit ensuite simultanément dans le milieu réactionnel, et ce, pendant 29 minutes, une solution de silicate de sodium (de rapport pondéral SiO₂/Na₂O égal à 3,55 +/- 0,12 et de densité d20 égale à 1,230 +/- 0,006) ayant une concentration de 235 g/L à un débit de 60 g/min, et de l'acide sulfurique de concentration égale à 80 g/L à un débit régulé de manière à maintenir le pH du milieu réactionnel à une valeur de 4,7.

On obtient à l'issue de la réaction une bouillie réactionnelle de silice précipitée qui est maintenue sous agitation, à une température de 95 °C, pendant 5 minutes. Après ce mûrissement, la bouillie de silice précipitée est récupérée, par vidange du réacteur.

La bouillie est filtrée et lavée sous vide. Le gâteau de filtration obtenu est lavé 4 fois avec 5 litres d'eau de ville. Il est ensuite remis en suspension par délitage mécanique en présence d'eau et d'aluminate de sodium (rapport pondéral Al/SiO₂ de 0,3 %). La bouillie résultante (extrait sec de 10 % en masse) est ensuite séchée par atomisation au moyen d'un atomiseur à turbine.

Les caractéristiques de la silice précipitée obtenue sous forme de poudre sont alors les suivantes :
- Surface spécifique CTAB : 158 m²/g
- Taille médiane d50 d'agrégats : 98 nm
- V_{(d5 - d50)} / V_{(d5 - d100)} : 0,83
- Mode (porosimétrie Hg) : 33 nm

On constate, notamment par MET, que la silice précipitée est formée d'agrégats de grosses particules primaires (gpp) de silice à la surface desquels se trouvent des petites particules primaires (ppp) de silice.

### EXEMPLE 2

Dans un réacteur en acier inoxydable de 25 litres, muni d'un système d'agitation par hélices et d'un chauffage par double enveloppe, on introduit :
- 7,91 litres d'eau de ville,
- 4286 grammes de silicate de sodium aqueux présentant un rapport pondéral SiO₂/Na₂O égal à 3,55 +/- 0,12 et de densité d20 égale à 1,230 +/-0,006) et ayant une concentration de 235 g/L,
- 134 grammes de sulfate de sodium Na₂SO₄ (électrolyte).

La concentration en silicate (exprimée en SiO₂) dans le pied de cuve est alors de 72 g/L.

Le mélange est homogénéisé par agitation et porté à 95 °C. L'ensemble de la réaction est réalisé sous agitation (300 tr/min, agitation hélice).

On introduit dans le mélange de l'acide sulfurique de concentration égale à 80 g/L pendant 14 minutes à un débit de 157,8 g/min (soit 2191 grammes d'acide sulfurique). On introduit ensuite dans le mélange de l'acide sulfurique 95 % jusqu'à ce que le pH du milieu réactionnel atteigne une valeur de 8 (soit 34,5 grammes d'acide sulfurique 95 % en 5 minutes).

Une fois l'acidification achevée, on introduit simultanément dans le milieu réactionnel, et ce pendant 10 minutes, une solution de silicate de sodium (de rapport pondéral SiO₂/Na₂O égal à 3,55 +/- 0,12 et de densité d20 égale à 1,230 +/- 0,006) ayant une concentration de 235 g/L à un débit de 80 g/min, et de l'acide sulfurique 95 %, à un débit régulé de manière à maintenir le pH du milieu réactionnel à une valeur de 8.

Au terme des 10 minutes d'addition simultanée, on introduit de l'acide sulfurique 95 % jusqu'à ce que le pH du milieu réactionnel atteigne une valeur de 4,8 (soit 30 grammes d'acide sulfurique en 8 minutes environ).

On introduit ensuite simultanément dans le milieu réactionnel, et ce pendant 27 minutes, une solution de silicate de sodium (de rapport pondéral SiO₂/Na₂O égal à 3,55 +/- 0,12 et de densité d20 égale à 1,230 +/- 0,006) ayant une concentration de 235 g/L à un débit de 62,8 g/min, et de l'acide sulfurique 95 %, à un débit régulé de manière à maintenir le pH du milieu réactionnel à une valeur de 4,8.

On obtient à l'issue de la réaction une bouillie réactionnelle de silice précipitée qui est maintenue sous agitation, à une température de 95 °C, pendant 5 minutes. Après ce mûrissement, la bouillie de silice précipitée est récupérée, par vidange du réacteur.

La bouillie est filtrée et lavée sous vide. Le gâteau de filtration obtenu est lavé 4 fois avec 5 litres d'eau de ville. Il est ensuite remis en suspension par délitage mécanique en présence d'eau et d'aluminate de sodium (rapport pondéral Al/SiO₂ de 0,3 %). La bouillie résultante (extrait sec de 10 % en masse) est ensuite séchée par atomisation au moyen d'un atomiseur à turbines.

Par rapport à l'exemple 1, on constate :
- un gain en productivité à la réaction (concernant la concentration finale exprimée en SiO₂ du milieu réactionnel et prenant en compte la durée de la réaction) de 28 %,
- un gain en consommation d'eau à la réaction de 25 %,
- un gain en consommation d'énergie à al réaction de 28 %.

Les caractéristiques de la silice précipitée obtenue sous forme de poudre sont alors les suivantes :
- Surface spécifique CTAB : 173m²/g
- Taille médiane d50 d'agrégats : 101 nm
- V_{(d5 - d50)} / V_{(d5} - _{d100)} : 0,84
- Mode (porosimétrie Hg) : 28 nm

On constate, notamment par MET, que la silice précipitée est formée d'agrégats de grosses particules primaires (gpp) de silice à la surface desquels se trouvent des petites particules primaires (ppp) de silice.

### EXEMPLE 3 (comparatif)

Dans un réacteur en acier inoxydable de 25 litres, muni d'un système d'agitation par hélices et d'un chauffage par double enveloppe, on introduit :
- 9,93 litres d'eau de ville,
- 4286 grammes de silicate de sodium aqueux présentant un rapport pondéral SiO₂/Na₂O égal à 3,55 +/- 0,12 et ayant une concentration égale à 235 g/L,
- 134 grammes de sulfate de sodium Na₂SO₄ (électrolyte).

La concentration en silicate (exprimée en SiO₂) dans le pied de cuve est alors de 61 g/L.

Le mélange est homogénéisé par agitation et porté à 95 °C. L'ensemble de la réaction est réalisé sous agitation (300 tr/min, agitation hélice).

On introduit dans le mélange de l'acide sulfurique 95 % (de densité d20 égale à 1,65) pendant 15 minutes à un débit de 10,33 g/min. On introduit ensuite dans le mélange de l'acide sulfurique 95 % jusqu'à ce que le pH du milieu réactionnel atteigne une valeur de 8 (soit 195 grammes d'acide sulfurique en 5 minutes).

Une fois l'acidification achevée, on introduit simultanément dans le milieu réactionnel, et ce pendant 10 minutes, une solution de silicate de sodium (de rapport pondéral SiO₂/Na₂O égal à 3,55 +/- 0,12 et de densité d20 égale à 1,230 +/- 0,006) ayant une concentration de 235 g/L à un débit de 80 g/min, et de l'acide sulfurique 95 %, à un débit régulé de manière à maintenir le pH du milieu réactionnel à une valeur de 8.

Au terme des 10 minutes d'addition simultanée, on introduit de l'acide sulfurique 95% jusqu'à ce que le pH du milieu réactionnel atteigne une valeur de 4,8 (soit 29,6 grammes d'acide sulfurique en 7 minutes).

On introduit ensuite simultanément dans le milieu réactionnel, et ce, pendant 27 minutes, une solution de silicate de sodium (de rapport pondéral SiO₂/Na₂O égal à 3,55 +/- 0,12 et de densité d20 égale à 1,230 +/- 0,006) ayant une concentration de 235 g/L à un débit de 62,8 g/min, et de l'acide sulfurique 95 %, à un débit régulé de manière à maintenir le pH du milieu réactionnel à une valeur de 4,8.

On obtient à l'issue de la réaction une bouillie réactionnelle de silice précipitée qui est maintenue sous agitation, à une température de 95 °C, pendant 5 minutes. Après ce mûrissement, la bouillie de silice précipitée est récupérée, par vidange du réacteur.

La bouillie est filtrée et lavée sous vide. Le gâteau de filtration obtenu est lavé 4 fois avec 5 litres d'eau de ville. Il est ensuite remis en suspension par délitage mécanique en présence d'eau et d'aluminate de sodium (rapport pondéral Al/SiO₂ de 0,3 %). La bouillie résultant (extrait sec de 10 % en masse) est ensuite séchée par atomisation au moyen d'un atomiseur à turbines.

Par rapport à l'exemple 1, on constate :
- un gain en productivité à la réaction (concernant la concentration finale exprimée en SiO₂ du milieu réactionnel et prenant en compte la durée de la réaction) de 28 %,
- un gain en consommation d'eau à la réaction de 25 %,
- un gain en consommation d'énergie à al réaction de 26 %.

Les caractéristiques de la silice précipitée obtenue sous forme de poudre sont alors les suivantes :
- Surface spécifique CTAB : 147 m²/g
- Taille médiane d50 d'agrégats : 100 nm
- V_{(d5 - d50)} / V_{(d5} - _{d100)} : 0,84
- Mode (porosimétrie Hg) : 31 nm

On constate, notamment par MET, que la silice précipitée est formée d'agrégats de grosses particules primaires (gpp) de silice à la surface desquels se trouvent des petites particules primaires (ppp) de silice.

## Revendications

1. Procédé de préparation de silice précipitée du type comprenant la réaction d'un silicate avec au moins un acide ce par quoi l'on obtient une suspension de silice, puis la séparation et le séchage de cette suspension, dans lequel la réaction du silicate avec l'agent acidifiant est réalisée de la manière suivante :
(i) on prépare une suspension aqueuse de silice précipitée, présentant un pH compris entre 2,5 et 5,3, de la manière suivante :
(1) on forme un pied de cuve initial comportant du silicate et un électrolyte, la concentration en silicate exprimée en SiO₂ dans ledit pied de cuve initial étant inférieure à 100 g/L, et, de préférence, la concentration en électrolyte dans ledit pied de cuve initial étant inférieure à 19 g/L,
(2) on ajoute de l'acide audit pied de cuve jusqu'à l'obtention d'une valeur du pH du milieu réactionnel d'au moins environ 7, de préférence comprise entre 7,5 et 8,5,
(3) on ajoute au milieu réactionnel, simultanément, de l'acide et du silicate,
(4) on arrête l'addition du silicate tout en continuant l'addition de l'acide dans le milieu réactionnel, jusqu'à l'obtention d'une valeur du pH du milieu réactionnel comprise entre 2,5 et 5,3,
(ii) on met en contact ladite suspension aqueuse de silice précipitée, avec de l'acide et du silicate, de telle manière que le pH du milieu réactionnel soit maintenu entre 2,5 et 5,3, de préférence entre 2,8 et 5,2,
procédé dans lequel :
- de l'acide concentré est utilisé dans l'étape (3) et dans l'étape (2) après l'atteinte du point de gel,
ledit acide concentré étant choisi dans le groupe constitué par l'acide sulfurique présentant une concentration d'au moins 80 % en masse, en particulier d'au moins 90 % en masse, l'acide acétique ou l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse.

2. Procédé selon la revendication 1, **caractérisé en ce qu'**après la mise en contact de la suspension aqueuse de silice précipitée avec de l'acide et du silicate, on ajoute dans le milieu réactionnel obtenu un agent alcalin, de préférence du silicate, et ce de manière à augmenter le pH du milieu réactionnel jusqu'à une valeur comprise entre 4,7 et 6,3, de préférence entre 5,0 et 5,8.

3. Procédé selon l'une des revendications 1 et 2, **caractérisé en ce que** de l'acide concentré est utilisé dans l'étape (i) et l'acide utilisé dans l'étape (ii) est de l'acide concentré, ledit acide concentré étant choisi dans le groupe constitué par l'acide sulfurique présentant une concentration d'au moins 80 % en masse, en particulier d'au moins 90 % en masse, l'acide acétique ou l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse.

4. Procédé selon la revendication 1, **caractérisé en ce que** l'acide utilisé dans les étapes (3) et (4) est un acide concentré choisi dans le groupe constitué par l'acide sulfurique présentant une concentration d'au moins 80 % en masse, en particulier d'au moins 90 % en masse, l'acide acétique ou l'acide formique présentant une concentration d'au moins 90 % en masse, l'acide nitrique présentant une concentration d'au moins 60 % en masse, l'acide phosphorique présentant une concentration d'au moins 75 % en masse, l'acide chlorhydrique présentant une concentration d'au moins 30 % en masse.

5. Procédé selon l'une des revendications 1 à 4, **caractérisé en ce que** ledit acide concentré est de l'acide sulfurique présentant une concentration d'au moins 80 % en masse, en particulier d'au moins 90 % en masse.

6. Procédé selon l'une des revendications 1 à 5, **caractérisé en ce que** ledit acide concentré est de l'acide sulfurique présentant une concentration comprise entre 90 et 98 % en masse.

7. Procédé selon l'une des revendications 1 à 6, **caractérisé en ce que** le séchage est effectué par atomisation.

## Patentansprüche

1. Verfahren zur Herstellung von Kieselsäure des Typs, bei dem man ein Silikat mit mindestens einer Säure umsetzt, wodurch man eine Suspension von Kieselsäure erhält, und diese Suspension dann trennt und trocknet, wobei die Umsetzung des Silikats mit dem Ansäuerungsmittel folgendermaßen durchgeführt wird:
(i) man stellt folgendermaßen eine wässrige Suspension von Fällungskieselsäure mit einem pH-Wert zwischen 2,5 und 5,3 her:
(1) man bildet eine anfängliche Vorlage, die Silikat und einen Elektrolyt enthält, wobei die als SiO₂ ausgedrückte Konzentration an Silikat in der anfänglichen Vorlage weniger als 100 g/L beträgt und die Konzentration an Elektrolyt in der anfänglichen Vorlage weniger als 19 g/L beträgt,
(2) man gibt Säure zu der Vorlage, bis man einen pH-Wert des Reaktionsmediums von mindestens ungefähr 7, vorzugsweise zwischen 7,5 und 8,5, erhält,
(3) man gibt dem Reaktionsmedium gleichzeitig Säure und Silikat zu,
(4) man hört mit der Zugabe von Silikat auf und fährt gleichzeitig mit der Zugabe der Säure zum Reaktionsmedium fort, bis man einen pH-Wert des Reaktionsmediums zwischen 2,5 und 5,3 erhält,
(ii) man bringt die wässrige Suspension von Fällungskieselsäure derart mit Säure und Silikat in Kontakt, dass der pH-Wert des Reaktionsmediums zwischen 2,5 und 5,3, vorzugsweise zwischen 2,8 und 5,2, gehalten wird,
wobei
- in Schritt (3) und in Schritt (2) nach dem Erreichen des Gelpunkts konzentrierte Säure verwendet wird,
wobei die konzentrierte Säure aus der Gruppe bestehend aus Schwefelsäure mit einer Konzentration von mindestens 80 Massen-%, insbesondere von mindestens 90 Massen-%, Essigsäure oder Ameisensäure mit einer Konzentration von mindestens 90 Massen-%, Salpetersäure mit einer Konzentration von mindestens 60 Massen-%, Phosphorsäure mit einer Konzentration von mindestens 75 Massen-% und Salzsäure mit einer Konzentration von 30 Massen-% ausgewählt wird.

2. Verfahren nach Anspruch 1, **dadurch gekennzeichnet, dass** man nach dem Inkontaktbringen der wässrigen Suspension von Fällungskieselsäure mit Säure und Silikat ein alkalisches Mittel, vorzugsweise Silikat, zu dem erhaltenen Reaktionsmedium gibt, um den pH-Wert des Reaktionsmediums auf einen Wert zwischen 4,7 und 6,3, vorzugsweise zwischen 5,0 und 5,8, zu erhöhen.

3. Verfahren nach einem der Ansprüche 1 und 2, **dadurch gekennzeichnet, dass** in Schritt (i) konzentrierte Säure verwendet wird und es sich bei der in Schritt (ii) verwendeten Säure um konzentrierte Säure handelt, wobei die konzentrierte Säure aus der Gruppe bestehend aus Schwefelsäure mit einer Konzentration von mindestens 80 Massen-%, insbesondere von mindestens 90 Massen-%, Essigsäure oder Ameisensäure mit einer Konzentration von mindestens 90 Massen-%, Salpetersäure mit einer Konzentration von mindestens 60 Massen-%, Phosphorsäure mit einer Konzentration von mindestens 75 Massen-% und Salzsäure mit einer Konzentration von 30 Massen-% ausgewählt wird.

4. Verfahren nach Anspruch 1, **dadurch gekennzeichnet, dass** es sich bei der in den Schritten (3) und (4) verwendeten Säure um eine konzentrierte Säure aus der Gruppe bestehend aus Schwefelsäure mit einer Konzentration von mindestens 80 Massen-%, insbesondere von mindestens 90 Massen-%, Essigsäure oder Ameisensäure mit einer Konzentration von mindestens 90 Massen-%, Salpetersäure mit einer Konzentration von mindestens 60 Massen-%, Phosphorsäure mit einer Konzentration von mindestens 75 Massen-% und Salzsäure mit einer Konzentration von 30 Massen-% handelt.

5. Verfahren nach einem der Ansprüche 1 bis 4, **dadurch gekennzeichnet, dass** es sich bei der konzentrierten Säure um Schwefelsäure mit einer Konzentration von mindestens 80 Massen-%, insbesondere mindestens 90 Massen-%, handelt.

6. Verfahren nach einem der Ansprüche 1 bis 5, **dadurch gekennzeichnet, dass** es sich bei der konzentrierten Säure um Schwefelsäure mit einer Konzentration zwischen 90 und 98 Massen-% handelt.

7. Verfahren nach einem der Ansprüche 1 bis 6, **dadurch gekennzeichnet, dass** die Trocknung durch Zerstäubung durchgeführt wird.

## Claims

1. Process for the preparation of precipitated silica of the type comprising the reaction of a silicate with at least one acid, whereby a silica suspension is obtained, and then the separation and the drying of this suspension, in which the reaction of the silicate with the acidifying agent is carried out in the following way:
(i) an aqueous precipitated silica suspension, exhibiting a pH of between 2.5 and 5.3, is prepared in the following way:
(1) an initial vessel heel comprising silicate and an electrolyte is formed, the concentration of silicate, expressed as SiO₂, in said initial vessel heel being less than 100 g/l and, preferably, the concentration of electrolyte in said initial vessel heel being less than 19 g/l,
(2) acid is added to said vessel heel until a value of the pH of the reaction medium of at least approximately 7, preferably of between 7.5 and 8.5, is obtained,
(3) acid and silicate are added simultaneously to the reaction medium,
(4) the addition of the silicate is halted while continuing the addition of the acid to the reaction medium, until a value of the pH of the reaction medium of between 2.5 and 5.3 is obtained,
(ii) said aqueous precipitated silica suspension is brought into contact with acid and silicate, so that the pH of the reaction medium is maintained between 2.5 and 5.3, preferably between 2.8 and 5.2,
in which process:
- concentrated acid is used in stage (3) and in stage (2) after the gel point has been reached
said concentrated acid being selected from the group consisting of sulfuric acid exhibiting a concentration of at least 80% by weight, in particular of at least 90% by weight, acetic acid or formic acid exhibiting a concentration of at least 90% by weight, nitric acid exhibiting a concentration of at least 60% by weight, phosphoric acid exhibiting a concentration of at least 75% by weight and hydrochloric acid exhibiting a concentration of at least 30% by weight.

2. Process according to Claim 1, **characterized in that**, after the aqueous precipitated silica suspension has been brought into contact with acid and silicate, an alkaline agent, preferably silicate, is added to the reaction medium, so as to increase the pH of the reaction medium up to a value of between 4.7 and 6.3, preferably between 5.0 and 5.8.

3. Process according to either of Claims 1 and 2, **characterized in that** concentrated acid is used in stage (i) and the acid used in stage (ii) is concentrated acid, said concentrated acid being selected from the group consisting of sulfuric acid exhibiting a concentration of at least 80% by weight, in particular of at least 90% by weight, acetic acid or formic acid exhibiting a concentration of at least 90% by weight, nitric acid exhibiting a concentration of at least 60% by weight, phosphoric acid exhibiting a concentration of at least 75% by weight and hydrochloric acid exhibiting a concentration of at least 30% by weight.

4. Process according to Claim 1, **characterized in that** the acid used in stages (3) and (4) is a concentrated acid selected from the group consisting of sulfuric acid exhibiting a concentration of at least 80% by weight, in particular of at least 90% by weight, acetic acid or formic acid exhibiting a concentration of at least 90% by weight, nitric acid exhibiting a concentration of at least 60% by weight, phosphoric acid exhibiting a concentration of at least 75% by weight and hydrochloric acid exhibiting a concentration of at least 30% by weight.

5. Process according to one of Claims 1 to 4, **characterized in that** said concentrated acid is sulfuric acid exhibiting a concentration of at least 80% by weight, in particular of at least 90% by weight.

6. Process according to one of Claims 1 to 5, **characterized in that** said concentrated acid is sulfuric acid exhibiting a concentration of between 90 and 98% by weight.

7. Process according to one of Claims 1 to 6, **characterized in that** the drying is carried out by atomization.
